# EUROPEAN PATENT APPLICATION

(11) **EP 4 015 451 A1**
(43) Date of publication of application: **22.06.2022**
(21) Application number: 20215134.6
(22) Date of filing: 17.12.2020
(51) Int. Cl.: C01B 21/26, C01B 21/28, C01B 21/38, C01B 21/46, B01D 53/56

(54) **MONO-PRESSURE PLANT FOR THE PRODUCTION OF NITRIC ACID AND METHOD FOR OPERATING SAME**

(71) Applicant: Yara International ASA, 0277 Oslo (NO)
(72) Inventor: VIGELAND, Bent, 3714 Skien (NO); ØIEN, Halvor, 3943 Porsgrunn (NO); RÖSLER, Ronald, 3728 Skien (NO); de Smet, Andre, 4535 JH Terneuzen (NL); FAUCONNIER, Peter, 1850 Grimbergen (BE)
(74) Representative: De Clercq & Partners

(57) **Abstract**

The disclosure concerns a mono-pressure plant for the production of nitric acid, comprising:
- an ammonia convertor configured for operating at a working pressure ranging between 2 bar and 16 bar, for oxidizing ammonia, thereby producing a gaseous NOx gas/steam mixture;
- an air compressor in fluid communication with the ammonia convertor, for pressurizing air to said working pressure;
- an absorber unit, configured for operating at said working pressure, particularly at the working pressure reduced by the pressure drop in the ammonia convertor (**4**) and during transport of the NOx gas stream to the absorber unit (**6**), particularly at the working pressure reduced by 0.01 bar to 1 bar, wherein the nitrogen oxides contained in a gaseous NOₓ stream react with water, thereby producing nitric acid;
- a first bleacher unit, configured for operating at a pressure that is at least 0.01 bar to 1 bar higher than the working pressure reduced by the pressure drop in the ammonia convertor (**4**) and during transport of the NOx gas stream to the absorber unit (**6**), and up to 30 bar, for stripping the dissolved nitrogen oxides from the output product stream, thereby producing a first NOₓ-loaded stripping gas; and
- a means for directing the first NOₓ-loaded stripping gas to an inlet of the absorber unit;
the plant being characterized in that:
- the plant further comprises a source of oxygen-rich gas, particularly a pressurized electrolyzers, at a pressure of 2 to 30 bar, for providing the bleacher unit with an oxygen-rich gas as a stripping medium via the inlet for the stripping medium; and
- optionally, the plant further comprises means for lowering the pressure of the first NOₓ-loaded stripping gas to a pressure that is 0.01 bar to 1 bar higher than the working pressure, reduced by the pressure drop in the ammonia convertor (**4**) and during transport of the NOx gas stream to the absorber.

The disclosure further comprises methods for operating a bleacher in the mono-pressure plant for the production of nitric acid. The disclosure further relates to the use of the mono-pressure plant of the disclosure in the methods of the disclosure.

## Description

### Field of the Disclosure

The disclosure relates to the field of nitric acid production, more in particular to a mono-pressure plant operating with a pressure bleacher unit operating with an oxygen-rich gas as stripping gas, and to a method for operating said mono-pressure plant, in particular for the recovery of energy provided by the operation of such bleacher unit.

### Background of the Disclosure

Pure nitric acid is a clear, colorless liquid with a strong odor. Nitric acid is produced in large quantities principally by catalytic oxidation of ammonia (Ostwald process). Ammonia is converted to nitric acid in two stages. The ammonia is first oxidized in an ammonia burner on platinum gauzes (commonly called ammonia convertor), producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide (NO, also referred to as nitrogen monoxide), following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished through heat exchange in heat exchangers and a cooler condenser in which condensed nitric acid is separated from nitric oxide, nitrogen dioxide and dinitrogen tetroxide gases, collectively called NOₓ gases. The cooler condenser is located before the absorption tower where the NOx gases are absorbed.

By absorption in water, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

The main process units in a nitric acid production plant, include an ammonia convertor (conversion of ammonia into nitric oxides using oxygen over a suitable catalyst), an oxidation and cooling section (conversion of nitric oxide into nitrogen dioxide and nitrogen tetroxide and cooling of the NOₓ gases), an absorber unit (absorption of NOₓ gases into water) and a bleacher unit (removal of unreacted dissolved gases, containing in particular NOₓ and gases, from the aqueous nitric acid solution, which give it its typical brownish color).

### Background Prior Art

The process for the production of nitric acid can be differentiated into a mono-pressure (single-pressure) and dual pressure (split-pressure) process. As used herein, in a mono-pressure process, the convertor and the absorber unit operate at essentially the same working pressure, taking into account the pressure drop in the plant. Such mono-pressure process generally includes medium-low pressure, that is 2 bar to 6 bar, and high pressure, that is 9 bar to 16 bar, processes. In a dual pressure process, the absorber unit operates at a higher working pressure than the ammonia converter. Modern dual pressure processes feature an ammonia convertor operating typically at 2 bar to 6 bar, and a higher pressure absorber unit operating at 9 bar to 16 bar.

A prior art mono-pressure process requires an air compressor to feed pressurised air (which comprises about 21 vol% of oxygen) to the convertor and to the absorber unit. The pressure of an air compressor is from 2 bar to 16 bar, inclusive.

The drive power for the air compressor typically originates from a tail-gas turbine and a steam turbine or electric motor. Accordingly, the compressor train of a mono-pressure nitric acid production plant typically comprises an air compressor, a tail-gas turbine, and a steam turbine or electric motor.

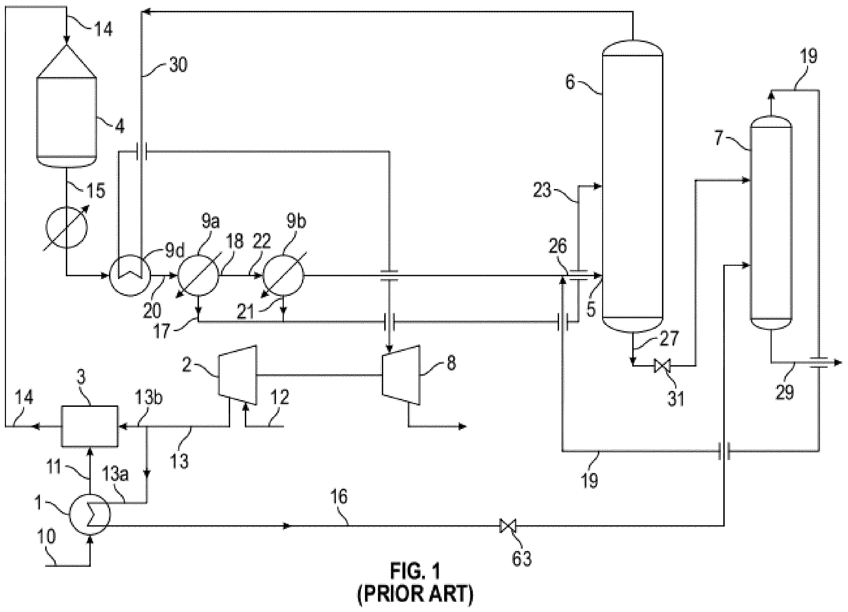

More in detail, referring to Figure 1, a mono-pressure plant and process according to the prior art works is as follows. Ammonia **10,** optionally pre-heated in a pre-heater unit (not shown) is mixed with compressed air **13b** in a mixing apparatus **3,** and the resulting ammonia/air mixture **14** is fed to a convertor **4,** where ammonia is oxidized over a suitable catalyst, thus obtaining a gaseous NOₓ gas/steam mixture **15,** comprising water and NO. The heat of the mixture coming out of the convertor **4** is recovered. In the subsequent oxidation stage **20** and **22,** the gaseous NOₓ stream is further oxidized to further convert the NO to NO₂ and N₂O₄, and cooled down in a cooler/separator **9a** and **9b** to respectively separate out aqueous diluted nitric acid mixtures **17** and **21** which are directed to an absorber unit **6,** commonly called absorption tower. The gaseous NOₓ stream **26** is sent to the absorber unit **6.** Inside the absorber unit **6,** the NOₓ gas reacts with water to produce a stream of raw nitric acid **27** also containing residual NOₓ gases, which is fed to a bleacher unit **7,** and a tail-gas **30.** The residual NOₓ gas is then stripped out with a gaseous medium **16** such as an oxygen-containing gas or air, inside a bleacher unit **7.** The NOₓ-loaded stripping gas **19** is directed to the inlet **5** of the absorber unit **6.** The stripped nitric acid stream **29** from the bleacher unit **7** is then sent to storage for further processing. The tail-gas **30** is sent to a catalytic tail-gas reactor (not shown) and the resulting gas then is expanded over a tail-gas turbine **8** before being released to the atmosphere.

The stripping gas **16** fed to the bleacher unit **7** is compressed air **13a** delivered by the air compressor **2** after heat exchange with the ammonia stream **10.** The air compressor **2** therefore provides therefore both compressed air streams **13a** and **13b.** The drive power for the air compressor **2** and the gaseous medium **16** originates from the tail gas turbine **8** and a steam turbine (not shown).

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. The increase of the primary air also causes the modification or replacement of the tail-gas and/or the steam-turbines and/or the electrical motor. However, the revamping has significant drawbacks. First of all, it entails elevated costs for the modification or replacement of the existing equipment, i.e. the air compressor and the corresponding turbines and electrical motor. In addition, the revamping of the equipment is also technically demanding leading to long plant downtime.

Another problem related to nitric acid production plants is the high amount of energy required in order to operate the air compressor. Consequently, a high amount of energy is required to achieve the targeted nitric acid production throughput.

Thus, there remains a need for a process and a corresponding plant setup for minimizing the amount of energy required in order to operate the air compressor in a mono pressure plant, thereby avoiding bottle-necks in the nitric acid production throughput associated with this compressor.

### Summary of the disclosure

The goal of the disclosure is achieved with a mono-pressure plant according to claim 1 and dependent claims 2 to 6, for the production of nitric acid. In particular, the present disclosure provides a mono-pressure plant for the production of nitric acid, comprising:
- an ammonia convertor, configured for operating at a working pressure ranging between 2 bar and 16 bar, for oxidizing ammonia, thereby producing a gaseous NOx gas/steam mixture, the ammonia convertor comprising at least one inlet for a stream of ammonia and pressurized air, preferably a stream of an ammonia/pressurized air mixture, and an outlet for said gaseous NOx gas/steam mixture;
- an air compressor, in fluid communication with the ammonia convertor, for pressurizing air to said working pressure;
- an absorber unit, configured for operating at said working pressure, particularly at the working pressure reduced by the pressure drop in the ammonia convertor and during transport of the NOx gas stream to the absorber unit, wherein the nitrogen oxides contained in a gaseous NOₓ stream react with water, thereby producing nitric acid, the absorber unit comprising an inlet for a gaseous NOx stream, an inlet for an aqueous solution, an outlet for a product stream containing a nitric acid solution and dissolved nitrogen oxides, and an outlet for a tail gas;
- a first bleacher unit, configured for operating at a pressure that is at least 0.01 bar to 1 bar higher than the working pressure reduced by the pressure drop in the ammonia convertor and during transport of the NOx gas stream to the absorber unit, and up to 30 bar, for stripping the dissolved nitrogen oxides from the output product stream, thereby producing a first NOₓ-loaded stripping gas, the absorber unit comprising an inlet for a stripping medium and an inlet for the product stream, an outlet for the first NOₓ-loaded stripping gas and an outlet for the stripped nitric acid stream; and
- a means for directing the first NOₓ-loaded stripping gas to the inlet of the absorber unit;
the plant being characterized in that:
- the plant further comprises a source of oxygen-rich gas at a pressure of 2 to 30 bar, particularly a pressurized electrolyser, wherein the oxygen-rich gas comprises more than 21 vol% oxygen, for providing the bleacher unit with an oxygen-rich gas as a stripping medium via the inlet for the stripping medium; and
- optionally, the plant further comprises means for lowering the pressure of the first NOₓ-loaded stripping gas to a pressure that is 0.01 bar to 1 bar higher than the working pressure reduced by the pressure drop in the ammonia convertor and during transport of the NOx gas stream to the absorber unit.

The goal of the disclosure is further achieved by operating a pressure bleacher unit in a mono-pressure nitric acid production plant, according to claim 7 and dependent claims 8 to 13. In particular, the present disclosure further provides for a method for operating a bleacher unit in a plant according to the present disclosure, said the ammonia convertor of the plant operating at a working pressure ranging from 2 bar to 16 bar, comprising the consecutive steps of:
a) providing a first bleacher unit with an oxygen-rich gas comprising more than 21 vol% oxygen as a stripping medium;
b) operating the first bleacher unit at a pressure that is at least 0.01 bar to 1 bar higher than the working pressure reduced by the pressure drop in the ammonia convertor and during transport of the NOx gas stream to the absorber unit, and up to 30 bar, thereby generating a first NOₓ-loaded stripping gas;
c) optionally, lowering the pressure of the first NOₓ-loaded stripping gas to a pressure that is 0.01 bar to 1 bar higher than the working pressure reduced by the pressure drop in the ammonia convertor and during transport of the NOx gas stream to the absorber unit; and
d) directing the first NOx-loaded stripping gas to the inlet of the absorber unit.

The main embodiment of the disclosure has several advantages.

One advantage is that the air compressor is now only pressurizing primary air for the convertor since the secondary air supply for the bleacher unit has now been replaced by a stream of an oxygen-rich gas from an oxygen-rich gas source, in particular a water electrolyser unit which is operated at a gas pressure of 2 bar to 30 bar. As it requires less power to pump water than to compress gas, there is a significant overall energy savings. Furthermore, the air compressor is less loaded as it is only compressing primary air, thus requiring the air compressor to consumes less work (for the same convertor throughput) or - put it differently - wherein the air compressor is able to handle an increased throughput of primary air (at an increased convertor throughput).

Another advantage is that the air compressor or the tail-gas turbine or the steam turbine do not need to be replaced by one with a higher throughput, and a higher nitric acid production can be achieved by only rerouting some of the gas streams.

In addition, the tail gas is less rich in NOₓ gases which required less work from a De-NOₓ unit and allows for additional power to be recovered from the tail gas turbine, as well as for the decrease of the size of the absorption tower. Also, the tail-gas being rich in oxygen, additional power can be produced from the tail-gas turbine.

### List of Figures

- Figure 1:: schematic representation of a mono-pressure nitric acid production plant according to the state of the art (dual pressure plant).
- Figure 2:: schematic representation of a mono-pressure nitric acid production plant according to an embodiment of the disclosure involving the supply of an oxygen-rich gas to a first bleacher unit of the mono-pressure nitric acid production plant.
- Figure 3:: schematic representation of a mono-pressure nitric acid production plant according to an embodiment of the disclosure as depicted in Figure 2, further involving a second, bleacher unit, operating at a lower pressure than the first bleacher unit.

### Detailed Description of the Disclosure

Throughout the description and claims of this specification, the words "comprise" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this specification (including any accompanying claims, abstract and drawings), or to any novel one, or any novel combination, of the steps of any method or process so disclosed.

The enumeration of numeric values by means of ranges of figures comprises all values and fractions in these ranges, as well as the cited end points. The term "... to ..." as used when referring to a range for a measurable value, such as a parameter, an amount, a time period, and the like, is intended to include the limits associated to the range that is disclosed.

As defined herein, nitrogen oxides gases or NOₓ gases are assumed to comprise, as major NOₓ gas components, nitric oxide (NO), nitrogen dioxide (NO₂) and dinitrogen tetroxide gases (N₂O₄).

As defined herein, and unless explicitly defined otherwise for a specific case, a medium-low pressure is defined as a pressure of 2 bar to 6 bar, and a high pressure is defined as a pressure of 9 bar to 16 bar. A medium pressure is always lower than a high pressure.

As defined herein, and unless explicitly defined otherwise for a specific case, "means for directing" are defined as means selected from the group of tubes, pipes, channels, conduits, ducts, and the like, capable of directing a fluid from a point A to a point B, which points A and B may be defined explicitly or implicitly, depending on the specific case.

As defined herein, and unless explicitly defined otherwise for a specific case, "about" is defined as a variation of maximum 10 % of the value considered. Hence, about 100 is defined as a value from 90 to 110. This accounts a.o. for measurement accuracy and clearance.

As defined herein, the working pressure is the pressure at which an ammonia convertor of a mono pressure nitric acid plant is being operated.

The present disclosure relates to a mono-pressure plant for the production of nitric acid and to a method for operating the mono-pressure plant, the mono-pressure plant, particularly the ammonia convertor, operating or operable at a working pressure ranging between 2 bar and 16 bar, wherein the mono-pressure plant comprises an ammonia convertor; an air compressor for providing pressurized air to the ammonia convertor, an absorber unit and a first bleacher unit, wherein the first bleacher unit is configured for operating at a pressure that is at least 0.01 bar to 1 bar higher than the working pressure reduced by the pressure drop in the ammonia convertor and during transport of the NOx gas stream to the absorber unit, and up to 30 bar, and wherein the plant further comprises a source of oxygen-rich gas at a pressure of 2 to 30 bar as the stripper medium in the first bleacher unit.

According to a first aspect of the disclosure, a mono-pressure plant for the production of nitric acid is provided. The plant comprises at least:
- an ammonia convertor (**4**), configured for operating at a working pressure ranging between 2 bar and 16 bar, for oxidizing ammonia, thereby producing a gaseous NOx gas/steam mixture (**15**), the ammonia convertor (**4**) comprising at least one inlet for a stream of ammonia and pressurized air, preferably a stream of an ammonia/pressurized air mixture (**14**), and an outlet for said gaseous NOx gas/steam mixture (**15**);
- an air compressor (**2**), in fluid communication with the ammonia convertor (**4**), for pressurizing air (**12**) to said working pressure;
- an absorber unit (**6**), configured for operating at said working pressure, particularly at the working pressure reduced by the pressure drop in the ammonia convertor (**4**) and during transport of the NOx gas stream to the absorber unit (**6**), particularly at the working pressure reduced by 0.01 bar to 1 bar, wherein the nitrogen oxides contained in a gaseous NOₓ stream (**26**) react with water, thereby producing nitric acid, the absorber unit (**6**) comprising an inlet (**5**) for a gaseous NOx stream, an inlet for an aqueous solution, an outlet for a product stream (**27**) containing a nitric acid solution and dissolved nitrogen oxides, and an outlet for a tail gas (**30**);

- a first bleacher unit (**7**), configured for operating at a pressure that is at least 0.01 bar to 1 bar higher than the working pressure reduced by the pressure drop in the ammonia convertor (**4**) and during transport of the NOx gas stream to the absorber unit (**6**), and up to 30 bar, for stripping the dissolved nitrogen oxides from the output product stream (**27**), thereby producing a first NOₓ-loaded stripping gas (**19**), the bleacher unit comprising an inlet for a stripping medium (60) and an inlet for the product stream (**27**), an outlet for the first NOₓ-loaded stripping gas and an outlet for the stripped nitric acid stream (**29**); and
- a means for directing the first NOₓ-loaded stripping gas (**19**) to the inlet (**5**) of the absorber unit (**6**);
the plant being characterized in that:
- the plant further comprises a source of oxygen-rich gas (**60**) at a pressure of 2 to 30 bar, wherein the oxygen-rich gas comprises more than 21 vol% oxygen, for providing the bleacher unit (**7**) with an oxygen-rich gas as a stripping medium (**16**) via the inlet for the stripping medium; and
- optionally, the plant further comprises means for lowering the pressure of the first NOₓ-loaded stripping gas (**19**) to a pressure that is 0.01 bar to 1 bar higher than the working pressure reduced by the pressure drop in the ammonia convertor (**4**) and during transport of the NOx gas stream to the absorber.

As defined herein, an oxygen-rich gas is a gas comprising more oxygen than is on the average present in air. In particular, an oxygen-rich gas comprises more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen. The oxygen-rich gas differs from the gas (air) used in the prior art in that it contains more than 21 vol% of oxygen. The oxygen-rich gas may be obtained from mixing oxygen with air or any other gas, suitable for its primary purpose, i.e. as a stripping medium in a bleacher unit.

As defined herein, the bleacher unit can be any bleacher unit known in the prior art, such as, but not restricted to, a sieve tray bleacher unit, a random packing bleacher unit, or a structured packing bleacher unit.

It is to be understood that the pressure of the first NOₓ-loaded stripping gas, exiting the first bleacher unit, may be lowered by the corresponding means to a pressure that is from 0.01 bar to 1 bar, more in particular from 0.05 bar to 0.5 bar, even more in particular from 0.1 bar to 0.2 bar over the pressure of the gaseous NOₓ stream entering the absorber unit. Stated otherwise, it is to be understood that the pressure drops in the first bleacher unit, in the ammonia convertor and in the transport of the NOₓ-loaded stripping gas and of the NOₓ stream from the ammonia convertor to the inlet of the absorber unit, are taken into account for determining the pressure of the NOₓ-loaded stripping gas to be combined with the gaseous NOₓ stream and to be fed the inlet of the absorber unit. As a result, the pressure in the first bleacher unit is at least 0.01 bar to 1 bar higher, more in particular from 0.05 bar to 0.5 bar, even more in particular from 0.1 bar to 0.2 bar, than the working pressure reduced by the pressure drop in the ammonia convertor (**4**) and during transport of the NOx gas stream to the absorber unit (**6**).

By using a separate source of an oxygen rich gas, the air compressor is now only pressurizing primary air for the ammonia convertor and is not connected to the bleacher unit via a stripping gas conduit, since the secondary air supply for the bleacher unit has now been replaced by a stream of an oxygen-rich gas from a separate unit, in particular a water electrolyser unit which is operated at a gas pressure of 2 bar to 30 bar. As it requires less power to pump water than to compress gas, there is a significant overall energy savings. Furthermore, the air compressor is less loaded as it is only compressing primary air, thus requiring the air compressor to produce less work (for the same ammonia convertor throughput). Hence, the air compressor is able to handle an increased throughput of primary air (at an increased ammonia convertor throughput).

Moreover, as the drive power for the air compressor originates from the tail-gas turbine and a steam turbine (not shown), less power required on the air compressor translates into less steam consumption from the steam turbine (not shown), thereby resulting in additional steam export.

Furthermore, the use of an oxygen-rich gas as stripping medium results in an oxygen-rich tail gas, which results in additional power being delivered by the tail gas turbine.

Finally, due to the oxygen-rich gas source being fed to the first bleacher unit and, subsequently, to the absorber unit, the absorption in the absorber unit is improved and, therefore, the size of the absorption tower can be decreased. It is to be understood that, even following any reduction of the size of the absorber unit, the ammonia convertor and the absorber unit are still both operated at a working pressure of 2 bar to 16 bar and both the ammonia convertor and the absorber unit are operated at a pressure that is the same. Alternatively, if the same size is retained for the absorber unit, the tail gas will be cleaner and less work will be required from a De-NOₓ unit (not shown) for cleaning the tail gas, such that its content in NOₓ gases are according to the environmental regulations.

According to a specific embodiment of the disclosure, the plant comprises, as the source, or part of a source, of oxygen-rich gas, a pressurised water electrolyser, in fluid communication with the bleacher unit, for providing a pressurised oxygen-rich gas to be used as a stripping medium, alone or mixed with pressured air or any other suitable gas. In any event, the air compressor is less loaded with respect to the prior art as the amount of secondary air to be compressed is reduced. In addition, as it requires less power to pump water than to compress gas, there is a significant overall energy savings.

A water electrolyser is a device for the electrolysis of water, being the decomposition of water into oxygen and hydrogen gas, due to the passage of an electric current there through. This technique can be used to make hydrogen gas, a main component of hydrogen fuel, and breathable oxygen gas.

A suitable water electrolyser may be comprised of an anode producing oxygen gas according to the reaction

2 OH⁻ = H₂O + ½ O₂ + 2 e⁻;

a cathode, producing hydrogen gas according to the reaction

2 H₂O + 2e⁻ = H₂ + 2 OH⁻;

an electrolyte consisting of an alkaline solution such as potassium hydroxide;
and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture. The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte.

An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current.

In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. Hydroxide OH- ions generated at the cathode migrate through the electrolyte in the diaphragm to the anode, where they are consumed by the anode reaction. Electrons travel the opposite direction in an external circuit.

The electrolyser may be operated at a temperature of 50 °C to 80 °C, or 60 °C to 80 °C, and a gas pressure of 2 bar to 30 bar, such as 3 bar to 30 bar, preferably 15 bar to 30 bar. The person skilled in the art will understand that, if needed, the pressure of the oxygen gas provided by the electrolyser can be adjusted and reduced, for example through the use of pressure release valves, in order for the pressure of the stripping gas to not exceed the targeted pressure in the first bleacher unit.

Currently, electrolysis units and nitric acid production facilities are not existing in close environments. However, with the emergence of green technologies, it is anticipated that water electrolysis, ammonia and nitric production will all be integrated on a single production site. Only the hydrogen produced by water electrolysers is currently used in the production of ammonia, whereas the oxygen gas is vented off. In the future, the water electrolyser and the nitric acid production being located nearby, also the oxygen produced by the water electrolyser can be used and benefit to the nitric acid production.

According to a specific embodiment of the disclosure, the stripping medium may be conditioned to a temperature of ambient temperature to 120 °C, or from 50 °C to 120 °C, or from 80 °C to 120 °C, or from 90 to 120 °C, before it is directed into the first bleacher unit. Bleaching of nitric acid in a bleacher unit in a nitric acid plant generally may be conditioned such that the temperature of the nitric acid is in the range of 30 to 60 °C (as measured inside the bleacher). By pre-conditioning the oxygen gas, the bleaching efficiency achieved in the first bleacher unit will be increased. Therefore, according to a specific embodiment, the plant according to the disclosure further comprises means for heating the stripping medium, such as, but not limited to, a pre-heater or a heat exchange system.

According to a specific embodiment of the disclosure, the first bleacher unit is a vertical bleaching tower, comprising:
- a structured packing; and
- a liquid distributor comprising a feed box having a serrated weir for distribution of the output product stream comprising dissolved nitrogen oxides through upward-pointing serrations of the serrated weir into perforated trays of the liquid distributor and located above the structured packing for distributing the aqueous nitric acid solution comprising the dissolved nitrogen oxides to the structured packing.

The above design of the bleacher unit has distinct advantages. The bleaching tower is a known restriction unit (bottle neck) in the nitric acid production. The problem is to meet the specifications of the product acid at high load. In general, the design of the column should ensure uniform distribution and contact between the upward flowing gas (stripping medium) and the downward liquid stream (aqueous nitric acid solution) through the entire column. The advantage of the specific design is that an increased nitric acid production capacity and a reduction of the amount of stripping gas used, can be obtained, while at least maintaining the quality of the aqueous nitric acid solution, i.e. the low level of dissolved nitrogen oxide gases.

Preferably, the structured packing has a surface area of at least 250 m²/m³, preferably 450-750 m²/m³.

Preferably, the liquid distributor has a drip-point density of at least 30 dripping points per m², preferably from 60 to 200 dripping points per m².

Preferably, the ratio between the height of the structured packing and the vertical bleaching tower diameter is at least 1, preferably at least 1.5, more preferably at least 2.

Preferably, the stripping gas is an oxygen-rich gas, moving in a counter-current direction to the acid solution, i.e. the output product stream and is in a gas/acid or enriched air/acid solution ratio of lower than 75 m³ air/m³ acid solution, preferably lower than 45 m³ air/m³ acid solution, more preferably lower than 30 m³ air/m³ acid solution, even more preferably lower than 20 m³ air/m³ acid solution.

Preferably, the pressure drop over the vertical bleaching tower is between 25 mbar and 65 mbar.

According to a specific embodiment of the disclosure, the plant further comprises a second bleacher unit, comprising:
- a first inlet for the stripped nitric acid stream in fluid communication with the first bleacher unit;
- a second inlet for a stripping gas stream;
- a first outlet for a second NOₓ-loaded stripping gas stream in fluid communication with the inlet of the absorber unit; and
- a second outlet for collecting the bleached nitric acid stream from the second bleacher unit;
wherein
- the second bleacher unit is configured for operating at or is operable at a pressure that is 0.01 bar to 1 bar higher than the working pressure reduced by the pressure drop in the ammonia convertor and during transport of the NOx gas stream to the absorber unit, and lower than the pressure at which the first bleacher unit is operating;
- the second bleacher unit is in fluid communication with the source of oxygen-rich gas, for providing the second bleacher unit with an oxygen-rich gas as a stripping medium; and
- the plant further comprises means for directing the second NOₓ-loaded stripping gas to the inlet of the absorber unit.

As defined herein, the bleacher unit can be any bleacher unit known in the prior art, such as, but not restricted to, a sieve tray bleacher unit, a random packing bleacher unit or a structured packing bleacher unit.

Since the second bleacher unit is operable or operates at a pressure that is 0.01 bar to 1 bar higher than the working pressure reduced by the pressure drop in the ammonia convertor and during transport of the NOx gas stream to the absorber unit, and the first bleacher unit is operable or operates at a higher pressure than the second bleacher unit, the output product stream is fed to the first bleacher unit, through a pump, in order to produce a pressurised product stream at the pressure of the first bleacher unit, hence suitable for feeding to the first bleacher unit.

The stripping gas to the second bleacher unit is generated by using the stripping gas to the first bleacher unit: the pressure of the stripping gas fed to the first bleacher unit is adjusted, for example through the use of one or more pressure release valves, in order for the stripping gas for the second bleacher unit to be at a lower pressure than the stripping gas for the first bleacher unit.

It is to be understood that pressure drops in the ammonia convertor, in the first bleacher unit, in the second bleacher unit and in the transport of the NOₓ-loaded stripping gases to the inlet of the absorber unit, which allow for the transport of the correspond gas flows, are taken into account. As a result, the pressure in the first bleacher unit and in the second bleacher unit are adjusted, in total, by the sum of those pressure drops, in order for the pressure inside the absorber unit to be the about the same as the pressure in the ammonia convertor reduced by the sum of the pressure drops. It is thus understood that the sum of the pressure in the absorber unit and the above mentioned pressure drops correspond to the working pressure, i.e. the pressure in the ammonia convertor.

The pressure of the first NOₓ-loaded stripping gas from the first bleacher unit is adjusted by a pressure control valve to the pressure in the second bleacher unit. The first NOₓ-loaded stripping gas after pressure adjustment and the second NOₓ-loaded stripping gas may then be combined to generate a third (combined) NOₓ-loaded stripping gas, which is then fed to the inlet of the absorber unit.

In the presence of the second bleacher unit, the stripped nitric acid stream is further stripped, and the dissolved gases, containing in particular NOₓ and oxygen gases, are evacuated from the stripped nitric acid stream.

With this embodiment, comprising a second bleacher unit, the quality of the stripped nitric acid stream can be further improved, in the sense that it contains less dissolved gases, in particular NOₓ and oxygen gases. In addition, by further stripping the stripped nitric acid stream coming out of the first bleacher unit, the amount of oxygen gases that will be released when the stripped nitric acid stream is further stripped down to atmospheric pressure in the storage tank, may be reduced. A high concentration of oxygen forces the equilibrium for nitric oxide ↔ nitrogen dioxide towards nitrogen dioxide, which results in brown gas emissions from the ventilation system of the storage tank. Hence, further stripping of the stripped nitric acid stream downstream the bleaching tower and prior to storing the nitric acid product, can result in less brown gas emissions coming out of the ventilation system of the product storage tank.

Furthermore, there is an additional amount of oxygen being provided to the absorber unit. As a result, the tail-gas from the absorber will be cleaner and less chemical conversion will be required from a DeNOₓ unit (not shown) for treating the tail-gas. Moreover, the absorption in the absorber unit will be improved and, therefore, the size of the absorption tower can be decreased. It is to be understood that, even following any reduction of the size of the absorber unit, the ammonia convertor and the absorber unit are still both operated at a working pressure of 2 bar to 16 bar and both the ammonia convertor and the absorber unit are operated at a pressure that is the same.

As an alternative to the second bleacher unit, the person skilled in the art will understand that it is possible to use a flash vessel for achieving the same benefits as achieved upon using the second bleacher unit.

According to a specific embodiment of the disclosure, the bleacher unit is a vertical bleaching tower, comprising:
- a structured packing; and
- a liquid distributor comprising a feed box having a serrated weir for distribution of the output product stream from the first bleacher unit comprising dissolved nitrogen oxides through upward-pointing serrations of the serrated weir into perforated trays of the liquid distributor and located above the structured packing for distributing the aqueous nitric acid solution comprising the dissolved nitrogen oxides to the structured packing.

For the second bleacher unit, the same parameters apply as for the first bleaching tower.

According to a specific embodiment of the disclosure, the working pressure is selected from the range of 2 bar to 6 bar and the pressure in the first bleacher unit is at least 1 bar higher than the working pressure reduced by the pressure drop in the ammonia convertor and during transport of the NOx gas stream to the absorber unit, ranging between 3 bar to 16 bar. In other words, the disclosure allows for mono-pressure nitric acid plant operating at a medium-low working pressure of 2 bar to 6 bar.

According to a specific embodiment of the disclosure, the working pressure is selected from the range of 9 bar to 16 bar and the pressure in the first bleacher unit is at least 1 bar higher than the working pressure, ranging between 17 bar to 30 bar. In other words, the disclosure allows for mono-pressure nitric acid plant operating at a high working pressure of 9 bar to 16 bar.

According to a second aspect of the disclosure, a method is provided for operating a bleacher unit in a plant according to the present disclosure, the ammonia convertor of the plant operating at a working pressure ranging from 2 bar to 16 bar, comprising the steps of:
a) providing a first bleacher unit with an oxygen-rich gas comprising more than 21 vol% oxygen as a stripping medium;
b) operating the first bleacher unit at a pressure that is at least 0.01 bar to 1 bar higher than the working pressure reduced by the pressure drop in the ammonia convertor and during transport of the NOx gas stream to the absorber unit, and up to 30 bar, thereby generating a first NOₓ-loaded stripping gas;
c) optionally, lowering the pressure of the first NOₓ-loaded stripping gas to the working pressure or to a pressure that is 0.01 bar to 1 bar higher than the working pressure reduced by the pressure drop in the ammonia convertor and during transport of the NOx gas stream to the absorber unit; and
d) directing the first NOₓ-loaded stripping gas to the inlet of the absorber unit.

As defined herein, an oxygen-rich gas is a gas comprising more oxygen than is on the average present in air. In particular, an oxygen-rich gas comprises more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen. The oxygen-rich gas differs from the gas used in the prior art in that it contains more than 21 vol% of oxygen. The oxygen-rich gas may be obtained from mixing oxygen with air or any other gas, suitable for its primary purpose, i.e. as a stripping medium in a bleacher unit.

As defined herein, the bleacher unit can be any bleacher unit known in the prior art, such as, but not restricted to, a sieve tray bleacher unit, a random packing bleacher unit, or a structured packing bleacher unit. Suitable and particular embodiments for the bleacher unit are described in the main embodiment.

It is to be understood that the pressure of the first NOₓ-loaded stripping gas, exiting the first bleacher unit, is lowered by the corresponding means to a pressure that is from 0.01 bar to 1 bar, more in particular from 0.05 bar to 0.5 bar, even more in particular from 0.1 bar to 0.2 bar, over the pressure of the gaseous NOₓ stream entering the absorber. Stated otherwise, it is to be understood that the pressure drops in the first bleacher unit, in the ammonia convertor and in the transport of the NOₓ-loaded stripping gas and of the gaseous NOₓ stream from the ammonia convertor to the inlet of the absorber unit 6, which actually results in the flow of the NOₓ-loaded stripping gas and of the second gaseous NOₓ stream to the inlet of the absorber unit, are taken into account for determining the pressure of the NOₓ-loaded stripping gas to be combined with the gaseous NOₓ stream and to be fed the inlet of the absorber unit. As a result, the pressure in the first bleacher unit is at least the working pressure adjusted, i.e. increased by the sum of those pressure drops, and up to 30 bar. Accordingly, in the present disclosure, the first bleacher unit is operating at a minimum pressure corresponding to an overpressure from 0.01 bar to 1 bar, more in particular from 0.05 bar to 0.5 bar, even more in particular from 0.1 bar to 0.2 bar, over the working pressure reduced by the pressure drop in the ammonia convertor and during transport of the NOx gas stream to the absorber unit, in order to account for the above mentioned pressure drops.

By using a separate source of an oxygen rich gas, the air compressor is now only pressurizing primary air for the ammonia convertor since the secondary air supply for the bleacher unit has now been replaced by a stream of an oxygen-rich gas from a separate unit, in particular a water electrolyser unit which is operated at a gas pressure of 2 bar to 30 bar. As it requires less power to pump water than to compress gas, there is a significant overall energy savings. Furthermore, the air compressor is less loaded as it is only compressing primary air, thus requiring the air compressor to produce less work (for the same ammonia convertor throughput). Hence, the air compressor is able to handle an increased throughput of primary air (at an increased ammonia convertor throughput).

Moreover, as the drive power for the air compressor originates from the tail-gas turbine and a steam turbine (not shown), less power required on the air compressor translates into less consumption of steam from the steam turbine (not shown) and, thereby, additional steam export. Furthermore, the use of an oxygen-rich gas as stripping medium results in an oxygen-rich tail gas, which results in additional power being extracted from the tail gas turbine.

Finally, due to the oxygen-rich gas source being fed to the first bleacher unit and, subsequently, to the absorber unit, the absorption in the absorber unit is improved and, therefore, the size of the absorption tower can be decreased. It is to be understood that, even following any reduction of the size of the absorber unit, the ammonia convertor and the absorber unit are still both operated at a working pressure of 2 bar to 16 bar and both the ammonia convertor and the absorber unit are operated at a pressure that is the same. Alternatively, if the same size is retained for the absorber unit, the tail gas will be cleaner and less work will be required from a De-NOₓ unit for cleaning the tail gas, such that its content in NOₓ gases are according to the environmental regulations.

According to a particular embodiment, the oxygen-rich gas comprises more than 95 vol% of oxygen.

According to a particular embodiment, the oxygen-rich gas to be used as the stripping medium , is provided, alone or mixed with air or any other suitable gas, by a pressurised water electrolyser operating at a pressure of 2 bar to 30 bar. Suitable electrolysers are described above, in the first aspect of the present disclosure.

It has been found that an improvement can be achieved by utilizing oxygen that already is pressurized. Indeed, the oxygen produced by a water electrolyser operating at higher pressure will be pressurized. Operating the water electrolyser at high pressure requires to pump water to the water electrolyser at a high pressure. However, pumping a liquid, in particular water, to a water electrolyser requires significantly less power than the compression of an oxygen-containing gas, in particular air, for use in a mono-pressure nitric acid production plant. Hence, the integration of a high pressure water electrolyser with a mono-pressure nitric acid production plant, in which pressurized oxygen is supplied to the mono-pressure nitric acid production plant, provides a large benefit in the form of energy saving associated with the compression of the oxygen-rich gas before its introduction in the mono-pressure nitric acid production plant.

Currently, electrolysis units and nitric acid production facilities are not existing in close environments. However, with the emergence of green technologies, it is anticipated that water electrolysis, ammonia and nitric production will all be integrated on a single production site. Only the hydrogen produced by water electrolysers is currently used in the production of ammonia, whereas the oxygen gas is vented off. In the future, the water electrolyser and the nitric acid production being located nearby, also the oxygen produced by the water electrolyser can be used and benefit to the nitric acid production.

According to a particular embodiment, the method further comprises, before step b), the step of:
e) pre-heating the oxygen-rich gas as a stripping medium to a temperature of ambient temperature to 120 °C, or from 50 °C to 120 °C, or from 80 °C to 120 °C, or from 90 to 120 °C.

Bleaching of nitric acid in a bleacher unit in a nitric acid plant generally may be conditioned such that the temperature of the nitric acid is in the range of 30 to 60 °C (as measured inside the bleacher). By pre-conditioning the oxygen gas, the bleaching efficiency achieved in the first bleacher unit will be increased. Therefore, according to a specific embodiment and as described under the main embodiment, the plant according to the disclosure further comprises means for heating the stripping medium, such as, but not limited to, a pre-heater or a heat exchange system.

According to a particular embodiment of the present disclosure, the method further comprises the step of:
f) operating a second bleacher unit at a pressure that is 0.01 bar to 1 bar higher than the working pressure reduced by the pressure drop in the ammonia convertor and during transport of the NOx gas stream to the absorber unit, and lower than the pressure at which the first bleacher unit is operating;
g) providing the bleacher unit with an oxygen-rich gas as a stripping medium, thereby obtaining a second NOx-loaded stripping gas stream; and
h) directing the second NOₓ-loaded stripping gas stream to the inlet of the absorber unit.

For the second bleacher unit, the same parameters apply as for the first bleaching tower as described herein.

Since the second bleacher unit operates at a pressure that is 0.01 bar to 1 bar higher than the working pressure reduced by the pressure drop in the ammonia convertor and during transport of the NOx gas stream to the absorber unit, and the first bleacher unit operates at a higher pressure than the second bleacher unit, the output product stream is fed to the first bleacher unit, through a pump, in order to produce a pressurised product stream at the pressure of the first bleacher unit, hence suitable for feeding to the first bleacher unit.

It is to be understood that pressure drops in the ammonia convertor, in the first bleacher unit, in the second bleacher unit and in the transport of the NOₓ-loaded stripping gases to the inlet of the absorber unit, which allow for the transport of the correspond gas flows, are taken into account. As a result, the pressure in the first bleacher unit and in the second bleacher unit are adjusted, in total, by the sum of those pressure drops, in order for the pressure inside the absorber unit to be the same as the pressure in the ammonia convertor reduced by the sum of the pressure drops.

The pressure of the first NOₓ-loaded stripping gas is adjusted by the pressure control valve to the pressure in the second bleacher unit. The first NOₓ-loaded stripping gas after pressure adjustment and the second NOₓ-loaded stripping gas are then combined to generate a third NOₓ-loaded stripping gas, which is then fed to the inlet of the absorber unit.

The stripping gas to the second bleacher unit may be generated by using the stripping gas to the first bleacher unit: the pressure of the stripping gas fed to the first bleacher unit is adjusted, for example through the use of one or more pressure release valves, in order for the stripping gas for the second bleacher unit to be at a lower pressure than the stripping gas for the first bleacher unit. In the presence of the second bleacher unit, the stripped nitric acid stream is further stripped, and the dissolved gases, containing in particular NOₓ and oxygen gases, are evacuated from the stripped nitric acid stream.

With this embodiment, the quality of the stripped nitric acid stream can be improved, in the sense that it contains less dissolved gases, in particular NOₓ and oxygen gases. In addition, by further stripping the stripped nitric acid stream coming out of the first bleacher unit, the amount of oxygen gases that will be released when the stripped nitric acid stream is further stripped down to atmospheric pressure in the storage tank, may be reduced. A high concentration of oxygen forces the equilibrium for nitric oxide ↔ nitrogen dioxide towards nitrogen dioxide, which results in brown gas emissions from the ventilation system of the storage tank. Hence, further stripping of the stripped nitric acid stream downstream the bleaching tower and prior to storing the nitric acid product, can result in less brown gas emissions coming out of the ventilation system of the product storage tank.

Furthermore, there is an additional amount of oxygen being provided to the absorber unit. As a result, the tail-gas from the absorber will be cleaner and less chemical conversion will be required from a DeNOₓ unit (not shown) for treating the tail-gas. Moreover, the absorption in the absorber unit will be improved and, therefore, the size of the absorption tower can be decreased. It is to be understood that, even following any reduction of the size of the absorber unit, the ammonia convertor and the absorber unit are still both operated at a working pressure of 2 bar to 16 bar and both the ammonia convertor and the absorber unit are operated at a pressure that is the same.

As an alternative to the second bleacher unit, the person skilled in the art will understand that it is possible to flash through a flash vessel instead of to further strip through a second bleacher unit, for achieving the same benefits as achieved upon further stripping through the second bleacher unit.

According to a specific embodiment of the disclosure, the working pressure is selected from the range of 2 bar to 6 bar and the pressure in the first bleacher unit is at least 1 bar higher than the working pressure, ranging between 3 bar and 16 bar. In other words, the disclosure allows to operate a nitric acid plant operating at a low-medium working pressure of 2 bar to 6 bar.

According to a specific embodiment of the disclosure, the working pressure is selected from the range of 9 bar to 16 bar and the pressure in the first bleacher unit is at least 1 bar higher than the working pressure, ranging between 17 bar to 30 bar. In other words, the disclosure allows to operate a nitric acid plant operating at a high working pressure of 9 bar to 16 bar.

### Use

According to a third aspect of the disclosure, the use of any embodiment of a mono-pressure nitric acid production plant according to the disclosure, for recovery of energy from a bleacher unit operating in the mono-pressure nitric acid production plant, is disclosed.

### Examples

### Example 1

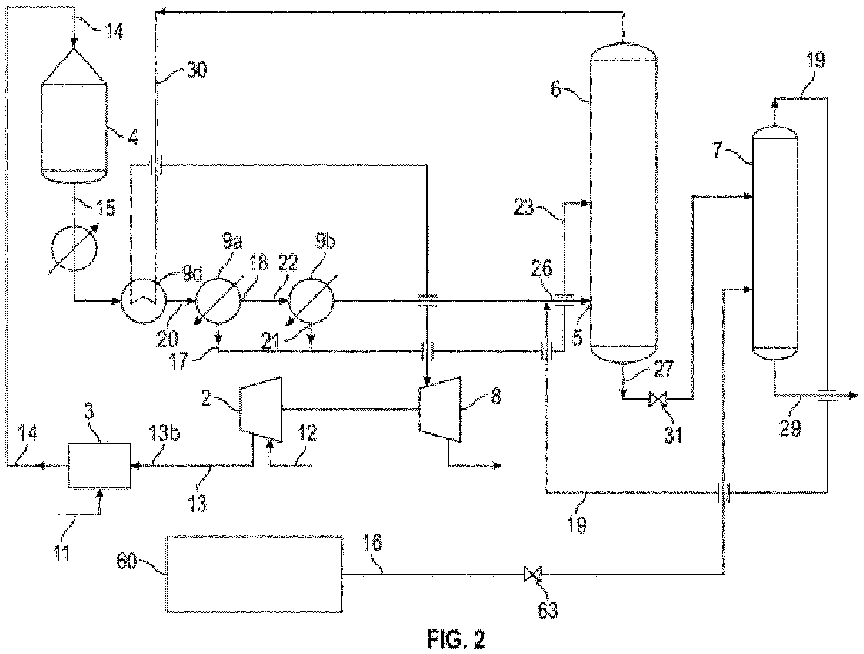

Reference is made to Figure 2. The mono-pressure plant for the production of nitric acid comprised:
- an ammonia convertor (**4**), operating at a working pressure ranging between 2 bar and 16 bar, for oxidizing ammonia, thereby producing a gaseous NOx gas/steam mixture (**15**), and comprising at least one inlet for a stream of an ammonia/pressurized air mixture (**14**), and an outlet for a gaseous NOx gas/steam mixture (**15**);
- an air compressor (**2**), for pressurizing air (**12**) to said working pressure and for providing the pressurized air to the ammonia convertor **4;**
- an absorber unit (**6**), operating at said working pressure decreased by the pressure drop losses occurring in the different units and transport elements of the plant, wherein the nitrogen oxides contained in a gaseous NOₓ stream (**26**) react with water, thereby producing nitric acid, the absorber unit (**6**) comprising an inlet (**5**) for a gaseous NOx stream, and an outlet for a product stream (**27**) containing a nitric acid solution and dissolved nitrogen oxides, and an outlet for a tail gas (**30**);
- a first bleacher unit (**7**), for stripping the dissolved nitrogen oxides from the output product stream (**27**), thereby producing a first NOₓ-loaded stripping gas (**19**), the absorber unit comprising an inlet for a stripping medium (**60**) and an inlet for the product stream (**27**), and an outlet for the stripped nitric acid stream (**29**); and
- a means for directing the first NOₓ-loaded stripping gas (**19**) to the inlet (**5**) of the absorber unit (**6**); and
- a source of oxygen-rich gas, particularly a pressurized water electrolyser (**60**), for providing the bleacher unit (**7**) with an oxygen-rich gas as a stripping medium (**16**) via the inlet for the stripping medium.

Pressurized oxygen gas **16** from an external, pressurised water electrolyser system **60** was fed into the nitric acid first bleacher unit **7** as the stripping medium at a pressure of 2 bar to 6 bar. The pressure in the first bleacher unit corresponded to the pressure in the ammonia convertor **4,** taking into account pressure drop losses in the different units of the plant. The pressure from the air compressor **2** is 5.4 bar. The NOₓ-loaded stripping gas **19** was redirected to the inlet of the absorber **6.** The pressure in the first bleacher unit **7** was 4.93 bar. At the inlet **5** of the absorber **6,** the pressure of the NOₓ-loaded stripping gas **19** was 4.93 bar. Upon feeding of the NOₓ-loaded stripping gas **19** and of the second gaseous NOₓ-containing stream **26,** the pressure in the absorber unit was 4.92 bar and corresponded to the pressure in the ammonia convertor **4** at 5.2 bar, decreased by the pressure drop losses occurring in the different units and transport elements of the plant. Compression work in the air compressor was reduced as no compression of secondary air was required. In the conventional plant the air compressor used 292.2 kWh/t 100% HNO₃ produced. In example 1 the air compressor used 251.7 kWh/t 100% HNO₃ produced, i.e a reduction of around 14%.

### Example 2

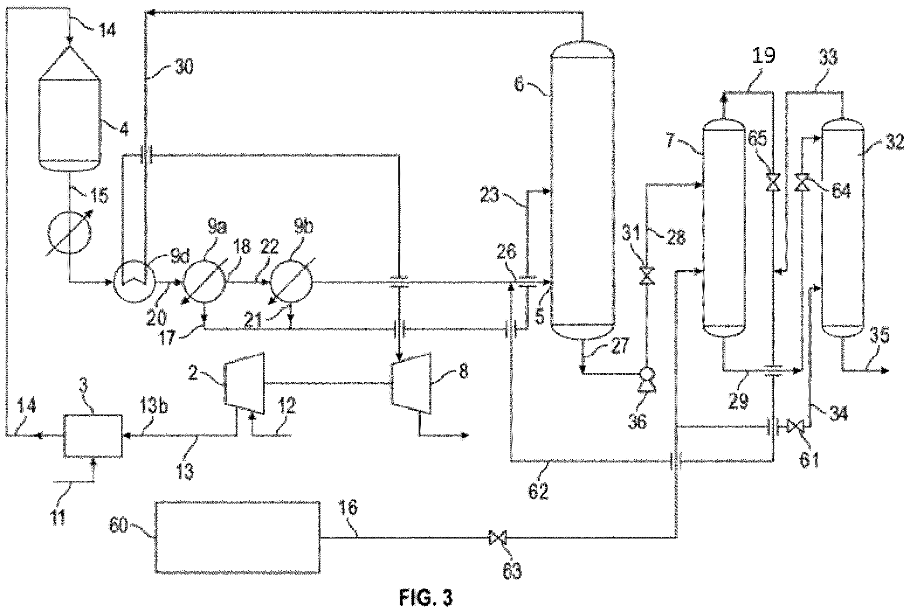

Reference is made to Figure 3. The mono-pressure plant for the production of nitric acid according to Figure 3 corresponded to the mono-pressure plant discussed in example 1 (shown in Figure 2), further comprising a second bleacher unit (**32**). The second bleacher unit **32** comprised:
- a first inlet for the stripped nitric acid stream (**29**), in fluid communication with the first bleacher unit (**7**);
- a second inlet for a stripping gas stream (**16**);
- a first outlet for a second NOₓ-loaded stripping gas stream (**33**), in fluid communication with the inlet (**5**) of the absorber unit (**6**); and
- a second outlet for collecting the bleached nitric acid stream (35) from the second bleacher unit (**32**).

In addition to the process described under Example 1, the stripped nitric acid stream **29** from the first bleacher unit **7** was further stripped into a second bleacher unit **32.** The first bleacher unit **7** was operated by oxygen produced from a pressurised water electrolyser **60** operated at a pressure of 16 bar. Stream **34** was obtained by splitting the stream **16,** used as stripping gas in the first bleacher unit **7** with a pressure of 15.95 bar, and expanding the part of the splitting stream to be fed to the second bleacher unit **32** over a pressure release valve **31,** such that the stream **34** had a pressure of 5.02 bar. The NOₓ-loaded stripping gas **19** leaving the first bleacher unit **7** was expanded over a pressure release valve **65** and combined with the NOₓ-loaded stripping gas **33** leaving the second bleacher unit **32,** to provide the NOₓ-loaded stripping gas **62.** The NOₓ-loaded stripping gas **62** was redirected to the inlet of the absorber **6.** At the inlet **5** of the absorber **6,** the pressure of the NOₓ-loaded stripping gas **62** was 4.92 bar. Upon feeding of the NOₓ-loaded stripping gas **19** and of the second gaseous NOₓ-containing stream **26,** the pressure in the absorber **6** was 4.92 bar and corresponded to the pressure in the ammonia convertor **4** at 5.2 bar, reduced by the pressure drop in the different units and transport elements of the plant. Compression work in the air compressor was reduced as no compression of secondary air was required. In addition, stripping of the liquid nitric acid stream **29** leaving the first bleacher unit **7** was improved. In example 2 the air compressor used 251.7 kWh/t 100% HNO₃ produced. The stripping of the liquid nitric acid was improved from example 1 to example 2: the simulated mass-fraction of N₂O₄ in the bleached acid, was 2.7.10⁻⁶ in example 1 comprising one bleacher unit, while it was 2.3.10⁻⁶ in example 2 comprising two bleachers.

### Example 3

### Reference is made to figure 2.

Example 1 was repeated with a pressure in the first bleacher unit **7** being selected from the range of 9 to 16 bar. The inlet pressure to the bleacher was 9.0 bar, and the outlet pressure was 8.9 bar. Compression work in the air compressor was reduced as no compression of secondary air was required. In example 3 the air compressor used 251.7 kWh/t 100% HNO₃ produced.

### Example 4

### Reference is made to figure 3.

In addition to the process described under Example 2, the stripped nitric acid stream **29** from the first bleacher unit **7** was further stripped into a second bleacher unit **32.** The first bleacher unit **7** was operated by oxygen produced from a pressurised water electrolyser **60** operated at a pressure of 20 bar. Stream **34** was obtained by splitting the stream **16,** used as stripping gas in the first bleacher unit **7,** with a pressure of 19.54 bar, and expanding the part of the splitting stream to be fed to the second bleacher unit **32** over a pressure release valve **31,** such that the stream **34** had a pressure corresponding to the pressure in the ammonia convertor **4** and was selected from the range of 2 bar to 6 bar, in this example 5.0 bar. The NOₓ-loaded stripping gas **19** leaving the first bleacher unit **7** was expanded over a pressure release valve **65** and combined with the NOₓ-loaded stripping gas **33** leaving the second bleacher unit **32,** to provide the NOₓ-loaded stripping gas **62.** The NOₓ-loaded stripping gas **62** was redirected to the inlet of the absorber **6.** At the inlet **5** of the absorber **6,** the pressure of the NOₓ-loaded stripping gas **62** was 4.92 bar. Upon feeding of the NOₓ-loaded stripping gas **19** and of the second gaseous NOₓ-containing stream **26,** the pressure in the absorber unit was 4.92 bar and corresponded to the pressure in the ammonia convertor **4** at 5.2 bar decreased by the pressure drop losses occurring in the different units and transport elements of the plant. Compression work in the air compressor was reduced as no compression of secondary air was required. In example 4 the air compressor used 251.7 kWh/t 100% HNO₃ produced.

The table below summarizes the reference case and examples:

| **Example** | | | Conventional case | Example 1 | Example 2 | Example 3 | Example 4 |
|---|---|---|---|---|---|---|---|
| Description | Unit | Number in drawing | | | | | |
| Pressure from air compressor | [bar abs] | 13 | 5.401 | 5.401 | 5.401 | 5.401 | 5.401 |
| Pressure from converter | [bar abs] | 15 | 5.201 | 5.201 | 5.201 | 5.201 | 5.201 |
| Pressure in LP bleacher inlet | [bar abs] | | 5.026 | 5.026 | 5.036 | | 5.036 |
| Pressure in HP bleacher inlet | [bar abs] | 28 | | | 15.954 | 9.000 | 19.954 |
| Pressure at absorber inlet | [bar abs] | 5 | 4.916 | 4.916 | 4.916 | 4.916 | 4.916 |
| Oxygen pressure | [bar abs] | 16 | - | 6 | 16 | 16 | 20 |
| Split of bleaching gas to LP absorber | | | | 1 | 0.66 | 0 | 0.66 |
| Mole flow of bleaching gas to bleacher(s) | [kmol/h] | 16 | 1107.3 | 790.2 | 808.7 | 790.0 | 808.7 |
| Production rate | [MTPD] | 29 or 35 | 1800 | 1802 | 1802 | 1802 | 1802 |
| Power to air compressor | [kW] | 2 | 21915 | 18901 | 18901 | 18901 | 18901 |
| Power from tail gas expander | [kW] | 8 | -10401 | -9770 | -9787 | -9789 | -9768 |
| Power from steam turbine | [kW] | | -17326 | -17181 | -17124 | -17126 | -17158 |
| Power production from compressor train | [kW] | | -5612 | -7851 | -7811 | -7815 | -7826 |
| | | | | | | | |

| **Specific values** | | | | | | | |
|---|---|---|---|---|---|---|---|
| Power to air compressor | [kWh/t HNO3] | | 292.2 | 251.7 | 251.7 | 251.7 | 251.7 |
| Power from tail gas expander | [kWh/t HNO3] | | -138.7 | -130.1 | -130.3 | -130.4 | -130.1 |
| Power from steam turbine | [kWh/t HNO3] | | -231.0 | -228.8 | -228.0 | -228.1 | -228.5 |
| Power production from compressor train | [kWh/t HNO3] | | -74.8 | -104.5 | -104.0 | -104.1 | -104.2 |
| Volume flow gas to LP bleacher | [m3/h] | 34 | 6658.09 | 4744.29 | 3181.27 | | 3174.91 |
| Volume flow gas to HP bleacher | [m3/h] | | | | 519.66 | 2638.81 | 415.37 |
| Volume flow acid to bleacher(s) | [m3/h] | 28 | 93.06 | 93.33 | 93.33 | 93.10 | 93.35 |
| Mass fraction NO in bleached acid | | | & 74E-18 | 1.05E-17 | 5.62E-25 | 5.95E-17 | 1.06E-24 |
| Mass fraction NO2 in bleached acid | | | 1.96E-14 | 6.18E-14 | 3.31E-19 | 3.33E-13 | 5.75E-19 |
| Mass fraction N2O4 in bleached acid | | | 6.76E-07 | 2.69E-06 | 2.34E-06 | 1.28E-05 | 2.80E-06 |

### LIST OF REFERENCE NUMERALS

| | | | |
|---|---|---|---|
| 2 | Air compressor | 20,22 | Oxidising section |
| 4 | Ammonia burner (ammonia convertor) | 26 | Second gaseous NOₓ-containing stream |
| 5 | Inlet of absorber unit | 27 | Absorber liquid nitric acid output stream |
| 6 | Absorber unit | 28 | Pressurized absorber liquid nitric acid output stream after pumping |
| 7 | First bleacher unit | 29 | First Bleacher unit liquid nitric acid output stream |
| 8 | Tail-gas turbine | 30 | Absorber tail-gas |
| 9a,9b | Water cooler/ condenser | 31 | Absorption tower level control valve |
| 9d | Tail-gas heater | 32 | Second bleacher unit |
| 10 | Ammonia stream | 33 | Second NOₓ-loaded stripping gas/NOₓ-effluent stream from second bleacher unit |
| 11 | Pre-heated ammonia stream | 34 | LP Bleacher unit |
| 12 | Air stream | 35 | Second bleacher unit liquid nitric acid output stream |
| 13 | Compressed air | 36 | pump |
| 13a | Compressed secondary air | 60 | Source of HP oxygen-rich gas, in particular a pressurized water electrolyser |
| 13b | Compressed primary air | 61 | Pressure control valve for the stripping gas to the second bleacher. |
| 14 | Ammonia convertor input stream | 62 | Combined (third) first and second NOₓ-loaded stripping gas after pressure adjustment of first NOₓ-loaded stripping gas/ NOₓ-effluent stream |
| 15 | First gaseous NOₓ stream/ammonia convertor | 63 | Pressure control valve for the stripping gas |
| | output stream | | |
| 16 | Stripping gas | 64 | Control valve for the liquid level in the first bleacher |
| 17, 21, 23 | Liquid nitric acid stream | 65 | Pressure control valve for the gas coming out at the outlet of the first bleacher |
| 19 | (First) NOₓ-effluent stream from first bleacher unit | | |

## Claims

1. A mono-pressure plant for the production of nitric acid, comprising:
- an ammonia convertor (**4**), configured for operating at a working pressure ranging between 2 bar and 16 bar, for oxidizing ammonia, thereby producing a gaseous NOx gas/steam mixture (**15**), the ammonia convertor (**4**) comprising at least one inlet for a stream of ammonia and pressurized air, preferably a stream of an ammonia/pressurized air mixture (**14**), and an outlet for said gaseous NOx gas/steam mixture (**15**);
- an air compressor (**2**), in fluid communication with the ammonia convertor (**4**), for pressurizing air (**12**) to said working pressure;
- an absorber unit (**6**), configured for operating at said working pressure, particularly at the working pressure reduced by the pressure drop in the ammonia convertor (**4**) and during transport of the NOx gas stream to the absorber unit (**6**), particularly at the working pressure reduced by 0.01 bar to 1 bar, wherein the nitrogen oxides contained in a gaseous NOₓ stream (**26**) react with water, thereby producing nitric acid, the absorber unit (**6**) comprising an inlet (**5**) for a gaseous NOx stream, an inlet for an aqueous solution, an outlet for a product stream (**27**) containing a nitric acid solution and dissolved nitrogen oxides, and an outlet for a tail gas (**30**);
- a first bleacher unit (**7**), configured for operating at a pressure that is at least 0.01 bar to 1 bar higher than the working pressure reduced by the pressure drop in the ammonia convertor (**4**) and during transport of the NOx gas stream to the absorber unit (**6**), and up to 30 bar, for stripping the dissolved nitrogen oxides from the output product stream (**27**), thereby producing a first NOₓ-loaded stripping gas (**19**), the bleacher unit comprising an inlet for a stripping medium (60) and an inlet for the product stream (**27**), an outlet for the first NOₓ-loaded stripping gas and an outlet for the stripped nitric acid stream (**29**); and
- a means for directing the first NOₓ-loaded stripping gas (**19**) to the inlet (**5**) of the absorber unit (**6**);
the plant being **characterized in that**:
- the plant further comprises a source of oxygen-rich gas (**60**) at a pressure of 2 to 30 bar, wherein the oxygen-rich gas comprises more than 21 vol% oxygen, for providing the bleacher unit (**7**) with an oxygen-rich gas as a stripping medium (**16**) via the inlet for the stripping medium; and
- optionally, the plant further comprises means for lowering the pressure of the first NOₓ-loaded stripping gas (**19**) to a pressure that is 0.01 bar to 1 bar higher than the working pressure, reduced by the pressure drop in the ammonia convertor (**4**) and during transport of the NOx gas stream to the absorber.

2. The plant according to claim 1, wherein said source of oxygen-rich gas is a pressurised water electrolyser (**60**).

3. The plant according to any one of claims 1 to 2, wherein the first bleacher unit (**7**) is a vertical bleaching tower, comprising:
- a structured packing; and
- a liquid distributor comprising a feed box having a serrated weir for distribution of the output product stream (**27**) comprising dissolved nitrogen oxides through upward-pointing serrations of the serrated weir into perforated trays of the liquid distributor and located above the structured packing for distributing the aqueous nitric acid solution comprising the dissolved nitrogen oxides to the structured packing.

4. The plant according to any one of claims 1 to 3, further comprising a second bleacher unit (**32**), comprising:
- a first inlet for the stripped nitric acid stream (**29**), in fluid communication with the first bleacher unit (**7**);
- a second inlet for a stripping gas stream (**16**);
- a first outlet for a second NOₓ-loaded stripping gas stream (**33**), in fluid communication with the inlet (**5**) of the absorber unit (**6**); and
- a second outlet for collecting the bleached nitric acid stream (**35**) from the second bleacher unit (**32**);
wherein
- the second bleacher unit (**32**) is configured for operating at a pressure that is 0.01 bar to 1 bar higher than the working pressure, particularly 0.01 bar to 1 bar higher than the working pressure reduced by the pressure drop loss in the ammonia convertor (**4**) and during transport from the gaseous NOx stream to the absorber unit (**6**) and lower than the pressure at which the first bleacher unit (**7**) is operating;
- the second bleacher unit (**32**) is in fluid communication with the source of oxygen-rich gas, for providing the second bleacher unit (**32**) with an oxygen-rich gas as a stripping medium (**34**); and
- the plant further comprises means for directing the second NOₓ-loaded stripping gas (**33**) to the inlet (**5**) of the absorber unit (**6**).

5. The plant according to claim 4, wherein the working pressure is selected from the range of 2 bar to 6 bar, and wherein the pressure in the first bleacher unit (**7**) is at least 1 bar higher than the working pressure.

6. The plant according to claim 4, wherein the working pressure is selected from the range of 9 bar to 16 bar, and wherein the pressure in the first bleacher unit (**7**) is at least 1 bar higher than the working pressure.

7. A method for operating a bleacher unit in a plant according to any one of claims 1 to 6, the ammonia convertor of the plant operating at a working pressure ranging from 2 bar to 16 bar, comprising the consecutive steps of:
a) providing a first bleacher unit (**7**) with an oxygen-rich gas comprising more than 21 vol% oxygen as a stripping medium (**16**);
b) operating the first bleacher unit (**7**) at a pressure that is at least 0.01 bar to 1 bar higher than the working pressure reduced by the pressure drop in the ammonia convertor (**4**) and during transport of the NOx gas stream to the absorber unit (**6**), and up to 30 bar, thereby generating a first NOₓ-loaded stripping gas (19);
c) optionally, lowering the pressure of the first NOₓ-loaded stripping gas (**19**) to a pressure that is 0.01 bar to 1 bar higher than the working pressure reduced by the pressure drop in the ammonia convertor (**4**) and during transport of the NOx gas stream to the absorber; and
d) directing the first NOₓ-loaded stripping gas (**19**) to the inlet (**5**) of the absorber unit (**6**).

8. The method according to claim 7, wherein the oxygen-rich gas comprises more than 95 vol% of oxygen.

9. The method according to any one of claims 7 to 8, wherein the oxygen-rich gas used as the stripping medium (**16**), is provided, alone or mixed with air or any other suitable gas, by a pressurised water electrolyser (**60**) operating at a pressure of 2 bar to 30 bar.

10. The method according to any one of claims 7 to 9, wherein the method further comprises before step b), the step of:
e) pre-heating the oxygen-rich gas as a stripping medium (**16**) to a temperature of ambient temperature to 120 °C, or from 50 °C to 120 °C, or from 80 °C to 120 °C, or from 90 to 120 °C.

11. The method according to any one of claims 7 to 10, wherein said plant is a plant according to any one of claim 4 to 6, wherein the method further comprises:
f) operating a second bleacher unit (**32**) at a pressure that is 0.01 bar to 1 bar higher than the working pressure reduced by the pressure drop loss in the ammonia convertor (**4**) and during transport of the gaseous NOx stream to the absorber unit (**6**), and lower than the pressure at which the first bleacher unit (**7**) is operating;
g) providing the bleacher unit (**32**) with an oxygen-rich gas as a stripping medium (**34**), thereby obtaining a second NOₓ-loaded stripping gas stream (**33**); and
h) directing the second NOₓ-loaded stripping gas stream (**33**) to the inlet (**5**) of the absorber unit (**6**).

12. The method according to claim 11, wherein the working pressure is selected from the range of 2 bar to 6 bar, and wherein the pressure in the first bleacher unit (**7**) is at least 1 bar higher than the working pressure.

13. The method according to claim 11, wherein the working pressure is selected from the range of 9 bar to 16 bar, and wherein the pressure in the first bleacher unit (**7**) is at least 1 bar higher than the working pressure.

14. Use of the mono-pressure nitric acid production plant according to any one of claims 1 to 6, for recovery of energy by operating one or more bleacher units in the mono-pressure nitric acid production plant, according to the method of any one of claims 7 to 13.
